# EUROPÄISCHE PATENTSCHRIFT

(11) **EP 1 102 932 B1**
(45) Veröffentlichungstag und Bekanntmachung des Hinweises auf die Patenterteilung: **04.12.2002**
(21) Anmeldenummer: 99941523.5
(22) Anmeldetag: 05.08.1999
(51) Int. Cl.: F04B 1/14

(54) **MOTORPUMPENEINHEIT FÜR EIN HOCHDRUCKREINIGUNGSGERÄT**
MOTOR PUMP UNIT FOR A HIGH-PRESSURE CLEANING APPARATUS
UNITE MOTOPOMPE POUR APPAREIL DE NETTOYAGE HAUTE PRESSION

(30) Priorität: 05.08.1998 DE 29813978 U
(43) Veröffentlichungstag der Anmeldung: 30.05.2001
(73) Patentinhaber: Alfred Kärcher GmbH & Co., 71364 Winnenden (DE)
(72) Erfinder: NATHAN, Robert, D-71522 Backnang (DE)
(74) Vertreter: Böhme, Ulrich, Dr. Dipl.-Phys.
(86) Internationale Anmeldenummer: EP9905674
(87) Internationale Veröffentlichungsnummer: WO00008335

(56) Entgegenhaltungen:
- WO-A-88/03228
- DE-A- 4 205 859
- DE-U- 29 604 364
- GB-A- 672 173
- US-A- 4 792 287

## Beschreibung

Die Erfindung betrifft eine Motorpumpeneinheit für ein Hochdruckreinigungsgerät mit einem Gehäuse, einer Antriebseinheit, und einer von dieser angetriebenen Kolbenpumpe, deren Kolben federnd an einer von der Antriebseinheit angetriebenen Taumelscheibe anliegen, mit einer drehfest mit der Antriebseinheit an deren taumelscheibenseitigem Ende verbundenen Antriebsplatte, die mit ihrer der Antriebseinheit zugewandten Seite über ein in einer im wesentlichen quer zur Längsrichtung der Kolben verlaufenden Ebene drehbares Stützlager an dem Gehäuse anliegt, und mit einem Taumelscheibenlager, über das die Taumelscheibe auf der anderen Seite der Antriebsplatte an einem Teil derselben anliegt, wobei das Taumelscheibenlager in einer Ebene drehbar ist, die gegenüber der quer zur Längsrichtung der Kolben verlaufenden Ebene geneigt ist, wobei der Durchmesser des Stützlagers größer ist als der Durchmesser des Taumelscheibenlagers.

Bei einer aus der US-A-2,941,475 bekannten Motorpumpeneinheit entspricht der Durchmesser des Stützlagers demjenigen des Taumelscheibenlagers. Die auftretenden Kippmomente können bei dieser Anordnung nicht direkt über das Stützlager auf ein Lagerschild des Gehäuses übertragen werden, ohne daß das Stützlager besonders stark beansprucht wird. Dies führt zwangsläufig zu einem erhöhten Verschleiß. Deshalb wird ein zusätzliches Radiallager am Ende einer Motorwelle angeordnet, das die auftretenden Kippmomente auffängt.

Nachteilig bei dieser Motorpumpeneinheit ist, daß das zusätzliche Radiallager zur Abstützung der Antriebsplatte an einem Lagerschild des Gehäuses notwendig ist. Außerdem ist die Herstellung der Antriebsplatte umständlich und aufwendig.

Eine gattungsgemäße Motorpumpeneinheit ist in der GB 672 173 beschrieben. Zwar ist bei der dort beschriebenen Konstruktion das Auftreten von Kippmomenten dadurch verhindert, daß der Durchmesser des Stützlagers größer ist als der Durchmesser des Taumelscheibenlagers, die Konstruktion ist aber außerordentlich kompliziert und aufwendig, beispielsweise sind Antriebsplatte und Taumelscheibe bei der bekannten Konstruktion als massive Formteile ausgebildet.

Es ist Aufgabe der vorliegenden Erfindung, eine gattungsgemäße Motorpumpeneinheit so auszugestalten, daß der Taumelscheibenantrieb mit einer minimalen Anzahl von besonders einfach herzustellenden Teilen gebildet werden kann.

Diese Aufgabe wird bei einer Motorpumpeneinheit der eingangs beschriebenen Art erfindungsgemäß dadurch gelöst, daß die Antriebsplatte eine flache Scheibe mit einer rinnenförmige Vertiefung ist, deren Tiefe in axialer Richtung über einen radialen Winkelbereich von 180° auf einen maximalen Wert ansteigt und über einen weiteren 180°-Winkelbereich wieder abfällt, so daß auf der anderen Seite der Antriebsplatte eine geneigte kreisscheibenförmige Bahn für das Taumelscheibenlager entsteht.

Diese Ausgestaltung ermöglicht eine besonders kostengünstige Herstellung der Antriebsplatte, wobei gleichzeitig durch Vorsehen einer Rinne in der flachen Scheibe eine Verfestigung der Antriebsplatte eintritt. Diese Verfestigung ist dadurch besonders effektiv, daß eine Rinne durch zwei Seitenwände begrenzt wird, die aus der Ebene der Scheibe herausstehen und die dadurch Versteifungskanten bilden. Bei einer solchen Ausgestaltung ist es möglich, außerhalb dieser Rinne, die eine geneigte, kreisscheibenförmige Bahn für das Taumelscheibenlager bildet, noch zusätzlich die Abstützung der Antriebsplatte an dem Stützlager vorzusehen, über das sich die Antriebsplatte am Gehäuse abstützt. Eine relativ dünne flache Scheibe wäre sonst nicht dazu geeignet, als Abstützung zu dienen, durch das Vorsehen der rinnenförmigen Vertiefung jedoch wird auch der flache, außerhalb liegende Bereich so verstärkt, daß er für die Abstützung geeignet ist.

Flache Scheiben sind zwar an sich aus der DE 42 05 859 Al und der DE 296 04 364 U1 bekannt. Sie weisen aber die genannte rinnenförmige Vertiefung nicht auf. Somit fehlt ihnen die sich dadurch ergebende Formsteifheit.

Besonders günstig ist es, wenn das Stützlager und das Taumelscheibenlager jeweils durch ein Wälzlager gebildet werden. Wälzlager sind in verschiedenen Größen und Ausführungen als Massenprodukte verfügbar. Dies reduziert die Herstellungskosten und erleichtert zusätzlich die Ersatzteilbeschaffung.

Bei einer besonderen Ausführungsform der vorliegenden Erfindung ist vorgesehen, daß die Antriebsplatte kreisförmige Lagerrinnen für das Stützlager und das Taumelscheibenlager aufweist und daß die Drehachse der Antriebsplatte durch die Mittelpunkte der durch die Lagerrinnen beschriebenen Kreise verläuft. Die Anordnung der Lagerrinnen für die beiden Lager an der Antriebsplatte reduziert zusätzlich den Teilebedarf. Die Lagerkörper der beiden Lager werden dabei nur in die jeweils zugehörige Lagerrinne eingelegt. Eine Fixierung in axialer Richtung ist nicht nötig, da die Taumelscheibe durch die federnd gehaltenen Kolben gegen das Taumelscheibenlager drückt. Dadurch wird auch die Antriebsplatte gegen das Stützlager gepreßt, weshalb die beiden Lager sicher in den Lagerrinnen gehalten und geführt werden. Durch die besondere Anordnung der Drehachsen der Lager relativ zur Drehachse der Antriebsplatte wird die Unwucht der Einheit von Taumelscheibe, Antriebsplatte und der beiden Lager minimiert.

Besonders vorteilhaft ist es, wenn die Antriebsplatte durch mindestens drei miteinander verbundene, gegeneinander geneigte, konzentrische kreisringförmige Bereiche gebildet wird und wenn der mittlere und der äußere Bereich die beiden Lagerrinnen aufweisen. Auf diese Weise besteht die Möglichkeit, die Antriebsplatte individuell auf die verfügbaren Lager abzustimmen. Der mittlere und der äußere Bereich verlaufen dabei jeweils parallel zu den Ebenen, in denen die jeweils zugeordneten Lager drehbar sind.

Dabei ist es besonders vorteilhaft, wenn der innere und der äußere Bereich in der gleichen Ebene liegen. Die Antriebsplatte kann so besonders einfach hergestellt werden, beispielsweise aus einer durchgehenden Platte, auf die eine kreisringförmige schiefe Ebene aufgesetzt wird.

Gemäß einer besonders bevorzugten Ausführungsform der Erfindung kann vorgesehen sein, daß die Antriebsplatte durch ein tiefgezogenes Blechteil gebildet wird. Auf diese Weise kann die Antriebsplatte mit minimalem Material- und Herstellungsaufwand geformt werden. Außerdem lassen sich die Lagerrinnen besonders leicht in ein Blechteil einprägen oder auf andere Weise einformen. Dadurch kann auch die Zahl der Bearbeitungsschritte für die Antriebsplatte minimiert werden.

Vorteilhaft ist es, wenn die Antriebseinheit durch einen Motor und ein von diesem angetriebenes Getriebe gebildet wird. Die Trennung der Antriebseinheit in Motor und Getriebe ermöglicht eine Kombination von Standardmotoren mit Standardgetrieben, um eine individuell gewünschte Drehzahl am taumelscheibenseitigem Ende der Antriebseinheit zu erreichen. Die Motoren können dann immer im optimalen Arbeitsbereich betrieben werden.

Besonders günstig ist es, wenn das von einer Motorwelle angetriebene Getriebe am taumelscheibenseitigen Ende der Motorwelle angeordnet ist. Auf diese Weise kann eine möglichst kompakte Bauform erreicht werden. Außerdem besteht die Möglichkeit, die Motorwelle zusätzlich über das Getriebe am Gehäuse abzustützen. Ein zusätzliches Lager für die Motorwelle ist somit überflüssig.

Bei einer bevorzugten Ausführungsform der Erfindung kann vorgesehen sein, daß das Getriebe durch ein Planetengetriebe gebildet wird. Ein Planetengetriebe bietet sich an, weil das zentrale Antriebsrad beispielsweise direkt von der Motorwelle angetrieben werden kann. Dies bietet eine optimale Kraftübertragung ohne eine zusätzliche Unwucht zu erzeugen. Außerdem bietet ein Planetengetriebe eine besonders günstige radiale Abstützung der Motorwelle.

Besonders günstig ist es dabei, wenn ein zentrales Antriebsrad des Planetengetriebes drehfest auf der Motorwelle angeordnet ist. Die Motorwelle treibt dadurch direkt das Planetengetriebe an, was zu einer optimalen Kraftübertragung führt, die Zahl der erforderlichen Bauteile reduziert und insgesamt die Bauform minimiert.

Bei einer besonders bevorzugten Ausführungsform der Erfindung kann vorgesehen sein, daß das taumelscheibenseitige Ende des Getriebes mit der Antriebsplatte verbunden ist. Die Verbindung von Getriebe und Antriebsplatte ermöglicht es, auf ein zusätzliches Radiallager zu verzichten. Das taumelscheibenseitige Ende des Getriebes stützt sich damit indirekt über die Antriebsplatte und das Stützlager am Gehäuse ab. Die direkte Verbindung reduziert zusätzlich die Baulänge der Motorpumpeneinheit, da keine zusätzliche Antriebswelle mehr erforderlich ist.

Grundsätzlich kann vorgesehen sein, daß die Antriebseinheit ein Mitnahmeelement aufweist, das in eine Ausnehmung der Antriebsplatte eingreift. Eine Verbindung der Antriebseinheit mit der Antriebsplatte wird so auf eine möglichst einfache Weise gebildet, was insbesondere ein einfaches Zusammenbauen durch Ineinanderstecken der beiden Teile erlaubt.

Das Mitnahmeelement muß dabei nicht die gesamte Ausnehmung der Antriebsplatte ausfüllen, jedoch ist es besonders vorteilhaft, wenn das Mitnahmeelement in die Ausnehmung formschlüssig eingreift. Dadurch wird die Kraftübertragung vom Mitnahmeelement auf die Antriebsplatte optimiert, die auftretenden Reibungskräfte dagegen auf ein Minimum reduziert.

Besonders vorteilhaft ist es dabei, wenn der Formschluß durch eine sternförmige Verzahnung gebildet wird. Bei einer zentralen Anordnung der Verzahnung werden so die Antriebskräfte am gleichmäßigsten übertragen. Dabei sind alle möglichen Zähnezahlen denkbar, auch ein- oder zweizähnige.

Gemäß einer bevorzugten Ausführungsform der Erfindung kann vorgesehen sein, daß die Ausnehmung am inneren der drei Bereiche der Antriebsplatte angeordnet ist. Jedem der drei Bereiche ist somit eine Funktion zugeordnet, die innere dient dabei der Kraftübertragung von der Antriebseinheit.

Die nachfolgende Beschreibung einer bevorzugten Ausführungsform der Erfindung dient im Zusammenhang mit der Zeichnung der näheren Erläuterung. Es zeigen:
- Figur 1:: einen Längsschnitt durch ein Hochdruckreinigungsgerät mit einer erfindungsgemäßen Motorpumpeneinheit;

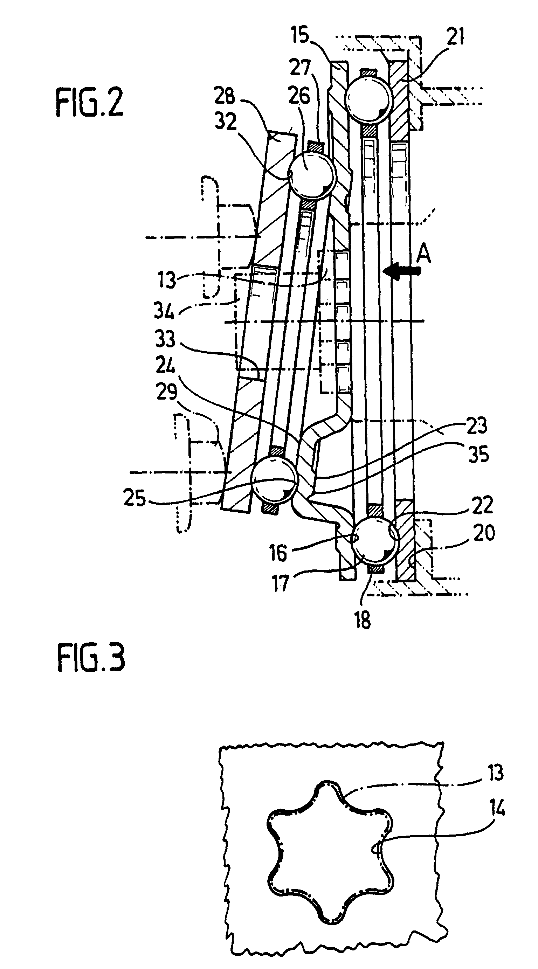

- Figur 2:: eine Schnittansicht durch eine Motorpumpeneinheit im Bereich der Antriebsplatte und
- Figur 3:: einen ausschnittsweisen Querschnitt durch den inneren Bereich der Antriebsplatte.

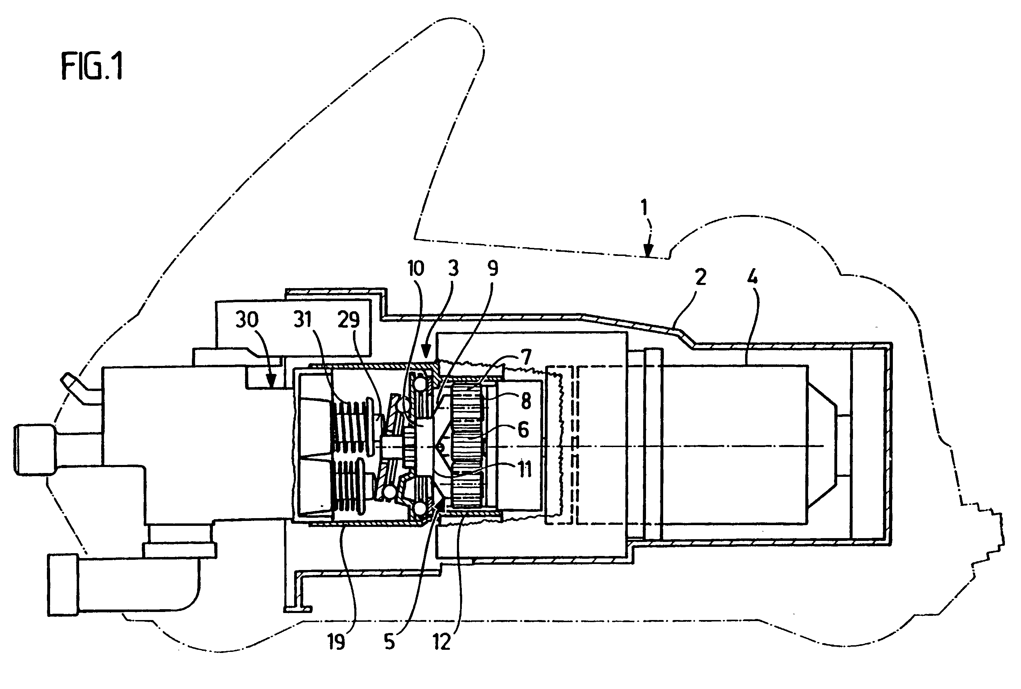

In Figur 1 ist schematisch ein Hochdruckreinigungsgerät 1 strichpunktiert dargestellt. In seinem Inneren befindet sich innerhalb eines Gehäuses 2 eine insgesamt mit dem Bezugszeichen 3 versehene Motorpumpeneinheit, die sich entlang einer Längsrichtung des Hochdruckreinigungsgeräts 1 erstreckt. Die Motorpumpeneinheit 3 umfaßt einen nur schematisch dargestellten Motor 4, der eine nicht näher dargestellte Motorwelle antreibt. Die Drehachse der Motorwelle erstreckt sich in axialer Richtung des Motors 4.

Am Ende der Motorwelle ist ein Planetengetriebe 5 angeordnet. Das zentrale Antriebsrad 6 des Planetengetriebes 5 ist drehfest mit der Motorwelle verbunden. Das zentrale Antriebsrad wird von drei Planetenrädern 7 umkreist. Die Planetenräder 7 sind jeweils auf einem fingerförmigen Lagerarm 8 angeordnet, der gegenüber der Drehachse seitlich versetzt ist. Jeder Lagerarm 8 ist über einen schräg auf die Drehachse hin gerichteten Verbindungssteg 9 mit einem zylindrischen Lagerkörper 10 des Planetengetriebes 5 an einer Stirnseite 11 des Lagerkörpers 10 verbunden. Der Lagerkörper 10 ist rotationssymmetrisch auf der Drehachse angeordnet.

Die Planetenräder 7 kämmen zusätzlich auf der verzahnten Innenseite einer hohlzylindrischen Getriebewand 12, die die Planetenräder 7 radial außenseitig umgibt.

Auf der anderen Seite des Lagerkörpers 10 ist ein Zylinder 34 angeordnet, dessen Höhe in axialer Richtung etwa der doppelten Höhe des Lagerkörpers 10 entspricht. Der Radius des Zylinders 34 ist etwa halb so groß wie der Radius des Lagerkörpers 10. Direkt an den Lagerkörper 10 ist ein sechszähniger Sternkörper 13 angeformt, der den Zylinder 34 umgibt, und dessen Höhe in axialer Richtung etwa ein Drittel der Höhe des Zylinders 34 beträgt. Der sechszähnige Sternkörper 13, dessen maximaler Durchmesser kleiner als derjenige des Lagerkörpers 10 ist, greift formschlüssig in eine korrespondierende Durchbrechung 14 einer Antriebsplatte 15 ein. Die im wesentlichen kreisförmige Antriebsplatte 15 weist in ihrem Zentrum die Durchbrechung 14 auf.

Die Antriebsplatte 15 stützt sich mit ihrem die Durchbrechung 14 umgebenden Bereich gegen den Lagerkörper 10 ab. Auf ihrer dem Lagerkörper 10 zugewandten Seite weist sie eine durchgehende kreisförmige Lagerrinne 16 auf, deren Durchmesser etwa 6/7 des Durchmessers der Antriebsplatte 15 beträgt. Die Lagerrinne 16 ist so geformt, daß in einem Lagerkäfig 18 geführte Lagerkugeln 17 möglichst reibungsfrei abrollen können. Im Übergangsbereich zwischen der Getriebewand 12 und einem daran anschließenden, im Durchmesser etwas größeren ebenfalls hohlzylindrischen Taumellagergehäuse 19 erstreckt sich ein radial auf die Drehachse hin weisender Vorsprung 20, der sich über den gesamten Umfang erstreckt. Dieser kreisringförmige Vorsprung 20 entspricht in seinen radialen Dimensionen in etwa dem Bereich der Antriebsplatte 15, der die Lagerrinne 16 trägt. An diesem Vorsprung 20 ist auf seiner dem Motor 4 abgewandten Seite ein kreisringförmiger Rinnenkörper 21 angeordnet, der sich parallel zum Vorsprung 20 in radialer Richtung zur Drehachse hin erstreckt, jedoch etwas über den Vorsprung 20 hinaus ragt. Der Rinnenkörper 21 weist eine Lagerrinne 22 auf, deren Durchmesser der Lagerrinne 16 entspricht und in der die Lagerkugeln 17 abrollen können. Der Rinnenkörper 21 mit der Lagerrinne 22, der Lagerkäfig 18 mit den darin geführten Lagerkugeln 17 und der äußere Bereich der Antriebsplatte 15 mit der Lagerrinne 16 bilden auf diese Weise ein Stützlager, über das sich die Antriebsplatte 15 an dem Vorsprung 20 abstützt.

Die Antriebsplatte 15 ist jedoch nicht durchgehend als flache Scheibe ausgestaltet, vielmehr weist sie eine sich etwa über ein Drittel des Radius erstreckende rinnenförmige Vertiefung 23 auf, deren Tiefe in axialer Richtung linear über einen radialen Winkelbereich von 180° von 0 auf einen maximalen Wert ansteigt, um über einen weiteren 180°-Winkelbereich wieder auf 0 abzufallen. Die Mittellinie der radialen Vertiefung 23 erstreckt sich dabei in einem Abstand von der Drehachse, der etwa 2/3 des Durchmessers der Antriebsplatte 15 beträgt. Durch die Vertiefung 23 entsteht auf der anderen Seite der Antriebsplatte 15 eine geneigte kreisscheibenförmige Bahn 24.

Diese auf der dem Motor 4 abgewandten Seite der Antriebsplatte 15 gebildete Bahn ist ebenfalls mit einer Lagerrinne 25 versehen. In dieser Rinne laufen die in einem Lagerkäfig 27 gehaltenen Kugeln 26 eines weiteren Wälzlagers. Gegen diese Kugeln wird eine flache kreisförmige Taumelscheibe 28 durch die sich in axialer Richtung erstreckenden Kolben 29 einer insgesamt mit dem Bezugszeichen 30 versehenen Axialkolbenpumpe durch die die Kolben 29 umgebenden Federn 31 in Richtung auf den Motor 4 hin vorgespannt. Die Taumelscheibe 28 weist auf ihrer den Kolben 29 abgewandten Seite eine weitere Lagerrinne 32 auf, deren Durchmesser demjenigen der Lagerrinne 25 entspricht.

Die Taumelscheibe mit der Lagerrinne 32, der Lagerkäfig 27 mit den darin gehaltenen Kugeln 26 und die Antriebsplatte mit der Bahn 24 und der darauf angeordneten Lagerrinne 25 bilden ein Taumelscheibenlager. Darüber hinaus weist die Taumelscheibe 28 eine zentrale kreisförmige Öffnung 33 auf, deren Durchmesser so gewählt ist, daß der Zylinder 34 berührungsfrei hindurchragen kann. Die Radien der Lagerrinnen 16 und 22 sind bei dieser Ausführungsform deutlich kleiner als diejenigen der Lagerrinnen 25 und 32. Durch den Anpreßdruck der Federn 31 werden die Kolben 29 so stark gegen die Taumelscheibe 28 gedrückt, daß ein Kippmoment auf die Antriebsplatte 15 übertragen wird. Die Wahl des größeren Radius der Lagerrinnen 16 und 22 ermöglicht es, daß das Stützlager dieses Kippmoment aufnehmen und über den Rinnenkörper 21 auf den Vorsprung 20 übertragen kann. Es erfolgt somit ein Kraftfluß vom Kolben 29 über die Taumelscheibe 28, die Kugeln 26 auf die Antriebsplatte 15, weiter über die Lagerkugeln 17 auf den Rinnenkörper 21 und schließlich auf den Vorsprung 20.

Die Antriebsplatte 15 weist jeweils auf der anderen Seite der Lagerrinnen 16, 22, 25 und 32 Verstärkungen 35 auf, um die Stabilität der Antriebsplatte 15 zu erhöhen. Bevorzugt wird die Antriebsplatte 15 aus einer flachen Blechscheibe mittels Tiefziehverfahren hergestellt. Dadurch ist die Antriebsplatte 15 leicht formbar und aus einem Stück herzustellen.

## Patentansprüche

1. Motorpumpeneinheit (3) für ein Hochdruckreinigungsgerät (1) mit einem Gehäuse (2), einer Antriebseinheit (4, 5), und einer von dieser angetriebenen Kolbenpumpe (30), deren Kolben (29) federnd an einer von der Antriebseinheit (4, 5) angetriebenen Taumelscheibe (28) anliegen, mit einer drehfest mit der Antriebseinheit (4, 5) an deren taumelscheibenseitigem Ende verbundenen Antriebsplatte (15), die mit ihrer der Antriebseinheit (4, 5) zugewandten Seite über ein in einer im wesentlichen quer zur Längsrichtung der Kolben (29) verlaufenden Ebene drehbares Stützlager (21, 17, 18, 15) an dem Gehäuse (2) anliegt und mit einem Taumelscheibenlager (15, 26, 27, 28), über das die Taumelscheibe (28) auf der anderen Seite der Antriebsplatte (15) an einem Teil derselben anliegt, wobei das Taumelscheibenlager (15, 26, 27, 28) in einer Ebene drehbar ist, die gegenüber der quer zur Längsrichtung der Kolben (29) verlaufenden Ebene geneigt ist, wobei der Durchmesser des Stützlagers (21, 17, 18, 15) größer ist als der Durchmesser des Taumelscheibenlagers (15, 26, 27, 28), **dadurch gekennzeichnet, daß** die Antriebsplatte (15) eine flache Scheibe mit einer rinnenförmige Vertiefung (23) ist, deren Tiefe in axialer Richtung über einen radialen Winkelbereich von 180° auf einen maximalen Wert ansteigt und über einen weiteren 180°-Winkelbereich wieder abfällt, so daß auf der anderen Seite der Antriebsplatte (15) eine geneigte kreisscheibenförmige Bahn (24) für das Taumelscheibenlager (15, 26, 27, 28) entsteht.

2. Motorpumpeneinheit nach Anspruch 1, **dadurch gekennzeichnet, daß** das Stützlager (21, 17, 18, 15) und das Taumelscheibenlager (15, 26, 27, 28) jeweils durch ein Wälzlager gebildet werden.

3. Motorpumpeneinheit nach einem der Ansprüche 1 oder 2, **dadurch gekennzeichnet, daß** die Antriebsplatte (15) kreisförmige Lagerrinnen (16, 25) für das Stützlager (21, 17, 18, 15) und das Taumelscheibenlager (15, 26, 27, 28) aufweist und daß die Drehachse der Antriebsplatte (15) durch die Mittelpunkte der durch die Lagerrinnen (16, 25) beschriebenen Kreise verläuft.

4. Motorpumpeneinheit nach einem der Ansprüche 1 bis 3, **dadurch gekennzeichnet, daß** die Antriebsplatte (15) durch mindestens drei miteinander verbundene, gegeneinander geneigte konzentrische kreisringförmige Bereiche (24) gebildet wird und daß der mittlere und der äußere Bereich die beiden Lagerrinnen (16, 25) aufweisen.

5. Motorpumpeneinheit nach Anspruch 4, **dadurch gekennzeichnet, daß** der innere und der äußere Bereich in der gleichen Ebene liegen.

6. Motorpumpeneinheit nach einem der voranstehenden Ansprüche, **dadurch gekennzeichnet, daß** die Antriebsplatte (15) durch ein tiefgezogenes Blechteil gebildet wird.

7. Motorpumpeneinheit nach einem der vorstehenden Ansprüche, **dadurch gekennzeichnet, daß** die Antriebseinheit durch einen Motor (4) und ein von diesem angetriebenes Getriebe (5) gebildet wird.

8. Motorpumpeneinheit nach Anspruch 7, **dadurch gekennzeichnet, daß** das von einer Motorwelle angetriebene Getriebe (5) am taumelscheibenseitigen Ende der Motorwelle angeordnet ist.

9. Motorpumpeneinheit nach einem der Ansprüche 7 oder 8, **dadurch gekennzeichnet, daß** das Getriebe (5) durch ein Planetengetriebe gebildet wird.

10. Motorpumpeneinheit nach Anspruch 9, **dadurch gekennzeichnet, daß** ein zentrales Antriebsrad (6) des Planetengetriebes (5) drehfest auf der Motorwelle angeordnet ist.

11. Motorpumpeneinheit nach einem der Ansprüche 7 bis 10, **dadurch gekennzeichnet, daß** das taumelscheibenseitige Ende des Getriebes (5) mit der Antriebsplatte (15) verbunden ist.

12. Motorpumpeneinheit nach einem der voranstehenden Ansprüche, **dadurch gekennzeichnet, daß** die Antriebseinheit (4, 5) ein Mitnahmeelement (13) aufweist, das in eine Ausnehmung (14) der Antriebsplatte (15) eingreift.

13. Motorpumpeneinheit nach Anspruch 12, **dadurch gekennzeichnet, daß** das Mitnahmeelement (13) in die Ausnehmung (14) formschlüssig eingreift.

14. Motorpumpeneinheit nach Anspruch 13, **dadurch gekennzeichnet, daß** der Formschluß durch eine sternförmige Verzahnung gebildet wird.

15. Motorpumpeneinheit nach einem der Ansprüche 12 bis 14, **dadurch gekennzeichnet, daß** die Ausnehmung (14) am inneren der drei Bereiche der Antriebsplatte (15) angeordnet ist.

## Claims

1. A motor-pump unit (3) for a high-pressure cleaning appliance (1) with a housing (2), a drive unit (4, 5), and a reciprocating pump (30) which is driven by the latter and the pistons (29) of which rest in a springing manner against a swash plate (28) driven by the drive unit (4, 5), with a driving plate (15) which is connected in a rotationally fixed manner to the drive unit (4, 5) at its end towards the swash plate and which rests with its side facing the drive unit (4, 5) against the housing (2) by way of a support bearing (21, 17, 18, 15) rotatable in a plane extending substantially transversely to the longitudinal direction of the pistons (29), and with a swash-plate bearing (15, 26, 27, 28) by way of which the swash plate (28) rests against part of the driving plate (15) on the other side of the said driving plate (15), the swash-plate bearing (15, 26, 27, 28) being rotatable in a plane which is inclined with respect to the plane extending transversely to the longitudinal direction of the pistons (29), and the diameter of the support bearing (21, 17, 18, 15) being larger than the diameter of the swash-plate bearing (15, 26, 27, 28), **characterized in that** the driving plate (15) is a flat disc with a channel-shaped depression (23), the depth of which increases in the axial direction to a maximum value over a radial angular area of 180° and decreases again over a further angular area of 180°, so that an inclined path (24) in the shape of a circular disc is formed for the swash-plate bearing (15, 26, 27, 28) on the other side of the driving plate (15).

2. A motor-pump unit according to Claim 1, **characterized in that** the support bearing (21, 17, 18, 15) and the swash-plate bearing (15, 26, 27, 28) are formed in each case by a rolling bearing.

3. A motor-pump unit according to one of Claims 1 and 2, **characterized in that** the driving plate (15) has circular bearing channels (16, 25) for the support bearing (21, 17, 18, 15) and the swash-plate bearing (15, 26, 27, 28), and the axis of rotation of the driving plate (15) extends through the centres of the circles described by the bearing channels (16, 25).

4. A motor-pump unit according to one of Claims 1 to 3, **characterized in that** the driving plate (15) is formed by at least three concentric annular regions (24) which are joined to one another and are inclined with respect to one another, and the middle region and the outer region have the two bearing channels (16, 25).

5. A motor-pump unit according to Claim 4, **characterized in that** the inner and the outer region are situated in the same plane.

6. A motor-pump unit according to one of the preceding Claims, **characterized in that** the driving plate (15) is formed by a deep-drawn sheet-metal part.

7. A motor-pump unit according to one of the preceding Claims, **characterized in that** the drive unit is formed by a motor (4) and a gearing (5) driven by the latter.

8. A motor-pump unit according to Claim 7, **characterized in that** the gearing (5) driven by a motor shaft is situated at the end of the motor shaft towards the swash plate.

9. A motor-pump unit according to one of Claims 7 and 8, **characterized in that** the gearing (5) is formed by a planetary gear.

10. A motor-pump unit according to Claim 9, **characterized in that** a central driving wheel (6) for the planetary gear (5) is mounted on the motor shaft in a rotationally fixed manner.

11. A motor-pump unit according to one of Claims 7 to 10, **characterized in that** the end of the gearing (5) towards the swash plate is connected to the driving plate (15).

12. A motor-pump unit according to one of the preceding Claims, **characterized in that** the drive unit (4, 5) comprises an entrainment element (13) which engages in a recess (14) in the driving plate (15).

13. A motor-pump unit according to Claim 12, **characterized in that** the entrainment element (13) engages in the recess (14) with positive locking.

14. A motor-pump unit according to Claim 13, **characterized in that** the positive locking is formed by a star-shaped serration.

15. A motor-pump unit according to one of Claims 12 to 14, **characterized in that** the recess (14) is situated in the inner of the three regions of the driving plate (15).

## Revendications

1. Unité motopompe (3) pour un appareil de nettoyage à haute pression (1), comportant un boîtier (2), une unité d'entraînement (4, 5) et une pompe à pistons (30) entraînée par celle-ci, dont les pistons (29) s'appliquent élastiquement contre un plateau oscillant (28) entraîné par l'unité d'entraînement (4, 5), comportant un plateau d'entraînement (15) relié solidairement en rotation à l'unité d'entraînement (4, 5) à son extrémité côté plateau oscillant, qui s'applique par son côté tourné vers l'unité d'entraînement (4, 5) contre le boîtier (2) via un palier d'appui (21, 17, 18, 15) mobile en rotation dans un plan s'étendant sensiblement perpendiculairement à la direction longitudinale des pistons (29), et comportant un palier de plateau oscillant (15, 26, 27, 28) via lequel le plateau oscillant (28) s'applique sur l'autre côté du plateau d'entraînement (15) sur une partie de celui-ci, le palier de plateau oscillant (15, 26, 27, 28) étant mobile en rotation dans un plan qui est incliné par rapport au plan s'étendant perpendiculairement à la direction longitudinale des pistons (29), le diamètre du palier d'appui (21, 17, 18, 15) étant supérieur au diamètre du palier de plateau oscillant (15, 26, 27, 28), **caractérisée en ce que** le plateau d'entraînement (15) est un disque plat présentant un renfoncement (23) en forme de rainure dont la profondeur augmente en direction axiale sur une plage angulaire radiale de 180° à une valeur maximale et redescend sur une autre plage angulaire de 180°, de sorte qu'il se forme sur l'autre côté du plateau d'entraînement (15) une voie inclinée (24) en forme de disque circulaire pour le palier de plateau oscillant (15, 26, 27, 28).

2. Unité motopompe selon la revendication 1, **caractérisée en ce que** le palier d'appui (21, 17, 18, 15) et le palier de plateau oscillant (15, 26, 27, 28) sont formés chacun par un palier à roulements.

3. Unité motopompe selon l'une ou l'autre des revendications 1 et 2, **caractérisée en ce que** le plateau d'entraînement (15) présente des rainures de montage circulaires (16, 25) pour le palier d'appui (21, 17, 18, 15) et pour le palier de plateau oscillant (15, 26, 27, 28), et **en ce que** l'axe de rotation du plateau d'entraînement (15) traverse les centres des cercles décrits par les rainures de montage (16, 25).

4. Unité motopompe selon l'une des revendications 1 à 3, **caractérisée en ce que** le plateau d'entraînement (15) est formé par au moins trois zones circulaires concentriques (24) reliées les unes aux autres et inclinées les unes par rapport aux autres, et **en ce que** la zone médiane et la zone extérieure présentent les deux rainures de montage (16, 25).

5. Unité motopompe selon la revendication 4, **caractérisée en ce que** la zone intérieure et la zone extérieure se situent dans le même plan.

6. Unité motopompe selon l'une des revendications précédentes, **caractérisée en ce que** le plateau d'entraînement (15) est formé par une pièce en tôle réalisée par emboutissage profond.

7. Unité motopompe selon l'une des revendications précédentes, **caractérisée en ce que** l'unité d'entraînement est formée par un moteur (4) et par un mécanisme de transmission (5) entraîné par celui-ci.

8. Unité motopompe selon la revendication 7, **caractérisée en ce que** le mécanisme de transmission (5) entraîné par un arbre moteur est agencé à l'extrémité côté plateau oscillant de l'arbre moteur.

9. Unité motopompe selon l'une ou l'autre des revendications 7 et 8, **caractérisée en ce que** le mécanisme de transmission (5) est formé par un mécanisme à engrenages planétaires.

10. Unité motopompe selon la revendication 9, **caractérisée en ce qu'**une roue d'entraînement centrale (6) du mécanisme à engrenages planétaires (5) est agencée solidairement en rotation sur l'arbre moteur.

11. Unité motopompe selon l'une des revendications précédentes 7 à 10, **caractérisée en ce que** l'extrémité côté plateau oscillant du mécanisme de transmission (5) est reliée au plateau d'entraînement (15).

12. Unité motopompe selon l'une des revendications précédentes, **caractérisée en ce que** l'unité d'entraînement (4, 5) comprend un élément entraîneur (13) qui s'engage dans un évidement (14) du plateau d'entraînement (15).

13. Unité motopompe selon la revendication 12, **caractérisée en ce que** l'élément entraîneur (13) s'engage par coopération de formes dans l'évidement (14).

14. Unité motopompe selon la revendication 13, **caractérisée en ce que** la coopération de formes est formée par une denture en forme d'étoile.

15. Unité motopompe selon l'une des revendications 12 à 14, **caractérisée en ce que** l'évidement (14) est ménagé sur la zone intérieure parmi les trois zones du plateau d'entraînement (15).
